# EUROPÄISCHE PATENTSCHRIFT

(11) **EP 1 048 512 B1**
(45) Veröffentlichungstag und Bekanntmachung des Hinweises auf die Patenterteilung: **21.12.2005**
(21) Anmeldenummer: 99125069.7
(22) Anmeldetag: 16.12.1999
(51) Int. Cl.: B60N 2/44, B60N 2/08

(54) **Handhebelvorrichtung für eine Betätigungseinrichtung an einem Fahrzeugsitz**
Handle device for an actuating device on a vehicle seat
Dispositif de levier pour un dispositif de commande sur un siège de véhicule

(30) Priorität: 27.04.1999 DE 19918985
(43) Veröffentlichungstag der Anmeldung: 02.11.2000
(73) Patentinhaber: C.Rob. Hammerstein GmbH & Co.KG, 42699 Solingen (DE)
(72) Erfinder: Frohnhaus, Ernst-Reiner, 42699 Solingen (DE); Karthaus, Ulrich, 42899 Remscheid (DE); Becker, Burckhard, 42655 Solingen (DE)
(74) Vertreter: Bauer, Wulf

(56) Entgegenhaltungen:
- EP-A- 0 408 932
- DE-C- 4 242 895
- GB-A- 2 300 880
- GB-A- 2 317 558
- US-A- 3 447 190

## Beschreibung

Die Erfindung bezieht sich auf eine Handhebelvorrichtung für eine Betätigungseinrichtung an einem Fahrzeugsitz. Diese Handhebelvorrichtung hat ein Lagerteil, das mit dem Fahrzeugsitz verbunden ist, und einen Handhebel, der a) um eine Schwenkachse schwenkbar am Lagerteil des Fahrzeugsitzes gelagert ist, b) mit einem Betätigungsglied, z.B. einem Bowdenzug, bewegungsverbunden ist und c) um die Schwenkachse zwischen einer Ruheposition und einer Betätigungsstellung schwenkbar ist.

Bei Betätigungseinrichtungen von Fahrzeugsitzen wird häufig ein schwenkbarer Handhebel benutzt, um die Betätigung selbst durchzuführen. Die Betätigung erfolgt über ein Betätigungsglied, das zumeist als Bowdenzug ausgeführt ist, aber auch eine Zuglasche, ein Druckarm oder ein Seilzug sein kann.

Es gibt nun Betätigungseinrichtungen, bei denen der Verlauf der am Handhebel aufzubringenden Kraft, um beispielsweise den Handhebel aus der Ruheposition in die Betätigungsstellung zu schwenken, nicht gleichmäßig ist, sondern Sprungstellen aufweist. Dies ist beispielsweise der Fall bei Arretiervorrichtungen für Längsverstelleinrichtungen von Fahrzeugsitzen, die mit mehreren Arretierstiften arbeiten. Ein Beispiel für derartige Arretiervorrichtungen gibt die EP 408 932 B1. Im verriegelten Zustand greifen pro Sitzseite nur einige, meist zwei Arretierstifte durch Öffnungen einer Rastenleiste, während die restlichen Arretierstifte eingriffslos auf der Rastenleiste aufliegen. Wird nun die Arretierung gelöst, indem der zugehörige Handhebel von der Ruheposition in die Betätigungsstellung geschwenkt wird, so werden zunächst die mehr oder weniger stark im Eingriff befindlichen Arretierstifte gehoben, anschließend kommen die nicht rastenden Arretierstifte hinzu und werden ebenfalls angezogen. Der Benutzer spürt mit jedem hinzukommenden Arretierstift bzw. Rastzahn, den er in die Freigabestellung ziehen will, einen mehr oder weniger großen Kraftsprung, also eine Änderung des Momentes, am Handhebel. Es besteht die Gefahr, dass er die Bewegung des Handhebels zu früh abbricht, weil er meint, es sei bereits eine Endstellung erreicht, tatsächlich befindet sich der Handhebel aber noch nicht in der Betätigungsstellung, so dass ein vollständiges Freirasten noch nicht erfolgt ist.

Für derartige Verstellvorrichtungen bzw. Arretiereinrichtungen ist die Handhebelvorrichtung der eingangs genannten Art im wesentlichen bestimmt.

Ausgehend von der Handhebelvorrichtung der eingangs genannten Art liegt der Erfindung die Aufgabe zugrunde, die vorbekannte Handhebelvorrichtung dahingehend weiterzubilden, dass die Betätigung des Handhebels für einen Benutzer vereinfacht wird und die Gefahr von Fehlbedienungen verringert wird, indem bei sprunghaft ansteigenden Betätigungskräften der Benutzer eine Unterstützung des Handhebels erfährt, die so geartet ist, dass er eine Bewegung möglichst immer in die jeweilige Endstellung weiterführt, insbesondere eine Bewegung aus der Ruheposition in die Betätigungsstellung stets vollständig durchführt.

Ausgehend von der Handhebelvorrichtung der eingangs genannten Art wird diese Aufgabe dadurch gelöst, dass zwischen Lagerteil und Handhebel eine Drehfeder angeordnet ist, die vorgespannt ist und die einen Federschenkel aufweist, der in Abhängigkeit von der Position des Handhebels entweder an einer Anlageschrägfläche des Handhebels oder an einer Abstützschrägfläche des Lagerteils anliegt und in einer Zwischenstellung des Handhebels von der einen Schrägfläche auf die andere Schrägfläche wechselt, wobei er immer auf die Schrägfläche wechselt, die in seiner Federrichtung weiter vorn ist als die andere Schrägfläche.

Die Drehfeder ist also innerhalb des Schwenkwinkels des Handhebels nur in einem Teilbereich des Schwenkwinkels wirksam, im anderen Teilbereich macht sie sich praktisch nicht bemerkbar. Sie wird in einem Umschaltwinkel, der sich zwischen der Winkelstellung der Ruheposition und der Winkelstellung der Betätigungsstellung befindet, zugeschaltet oder weggeschaltet. Die Drehfeder wird daher im folgenden auch als Zuschaltfeder bezeichnet.

Ausgehend von der Ruheposition macht sich die Drehfeder im ersten Schwenkwinkelbereich bis zum Umschaltwinkel nicht bemerkbar. Sobald der Umschaltwinkel erreicht ist, springt die Drehfeder mehr oder weniger rasch ein und unterstützt nun die Schwenkbewegung des Handhebels in die Betätigungsstellung hin. Da sie vorgespannt ist, setzt sie im Umschaltwinkel mit einer bestimmten Spannung ein, bewirkt also mehr oder weniger abrupt ein gewisses Drehmoment auf den Handhebel.

Ausgehend von der Ruheposition kann man bei einer Bewegung des Handhebels in die Betätigungsstellung das Moment, das durch die Drehfeder bewirkt wird, also wie folgt beschreiben. Zunächst bewirkt die Drehfeder kein Moment, bis zum Umschaltwinkel. Im Umschaltwinkel springt das durch die Drehfeder bewirkte Drehmoment von 0 auf einen von der Drehfeder bestimmten Wert. Das Drehmoment fällt von dem Wert im Umschaltwinkel bei Weiterbewegen des Handhebels hin in die Betätigungsstellung leicht ab, entsprechend der dabei erfolgenden Entspannung der Feder.

Die Umschaltung der Feder zwischen einer Abstützung ihres Federschenkels am Lagerteil oder am Handhebel wird durch die Schrägflächen erreicht. Sie sind so angeordnet, dass der Federschenkel keine stabile Position hat, vielmehr durch einen Bereich der zur jeweils anderen Schrägfläche gehört, nämlich eine Haltefläche, gegen ein Abrutschen von der betrachteten Schrägfläche gesichert wird. Das Umschalten geschieht dadurch, dass die Haltefläche weggedreht wird, so dass der Federschenkel auf die andere Schrägfläche rutschen kann. Der Federschenkel befindet sich jeweils auf der Schrägfläche, die in seiner Federrichtung weiter vom ist als die andere Schrägfläche.

Die Halteflächen befinden sich in einer Ebene, die quer zur Schwenkachse verläuft. Sie sind zur Anlage am Federschenkel bestimmt. Sie verlaufen in einem Winkel größer 90 Grad zur Schrägfläche, der Winkel ist so gewählt, dass keine Selbsthemmung des Federschenkels auftreten kann.

Im Umschaltwinkel verlaufen die beiden Schrägflächen V-förmig zueinander, der Federschenkel befindet sich dann innerhalb der V-förmigen Rille, die die beiden Schrägflächen in der betrachteten Position miteinander bilden.

Die Drehfeder hat weiterhin einen Abstützschenkel. Dieser Abstützschenkel liegt entweder permanent am Lagerteil oder am Handhebel an. Er wird im Gegensatz zum Federschenkel nicht umgeschaltet.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
- Fig. 1:: eine perspektivische Darstellung einer Handhebelvorrichtung mit nur schematisch angedeuteter Betätigungsvorrichtung,
- Fig. 2:: ein Ausschnitt aus Figur 1 für den Schaltbereich der Zuschaltfeder, bei anderer Betrachtungsrichtung als in Figur 1 und
- Fig. 3:: eine Darstellung wie Figur 1, jedoch zusätzlich mit einer Unterstützungsfeder zwischen Handhebel und Lagerteil.

Wie beide Ausführungsbeispiele zeigen, hat die Handhebelvorrichtung einen Handhebel 20, der um eine Schenkachse 22 schwenkbar an einem Lagerteil 24 angeordnet ist. Die Handhebelvorrichtung ist Bestandteil eines Fahrzeugsitzes, nämlich einer Verstelleinrichtung an diesem Fahrzeugsitz. Das Lagerteil 24 hat entsprechende Befestigungsbereiche 26, um an einem Teil eines Fahrzeugsitzes festgelegt zu werden, beispielsweise mit einer Sitzschiene einer Längsverstellvorrichtung oder mit einem Sitzträger verbunden zu werden.

Durch den Handhebel 20 wird ein zugfestes oder druckfestes Betätigungsglied betätigt, das in den gezeigten Ausführungsbeispielen als Bowdenzug 28 ausgeführt ist. Eine Seele 30 dieses Bowdenzuges 28 ist am Handhebel 20 fixiert, während eine Hülle 32 des Bowdenzuges am Lagerteil 24 festgelegt ist.

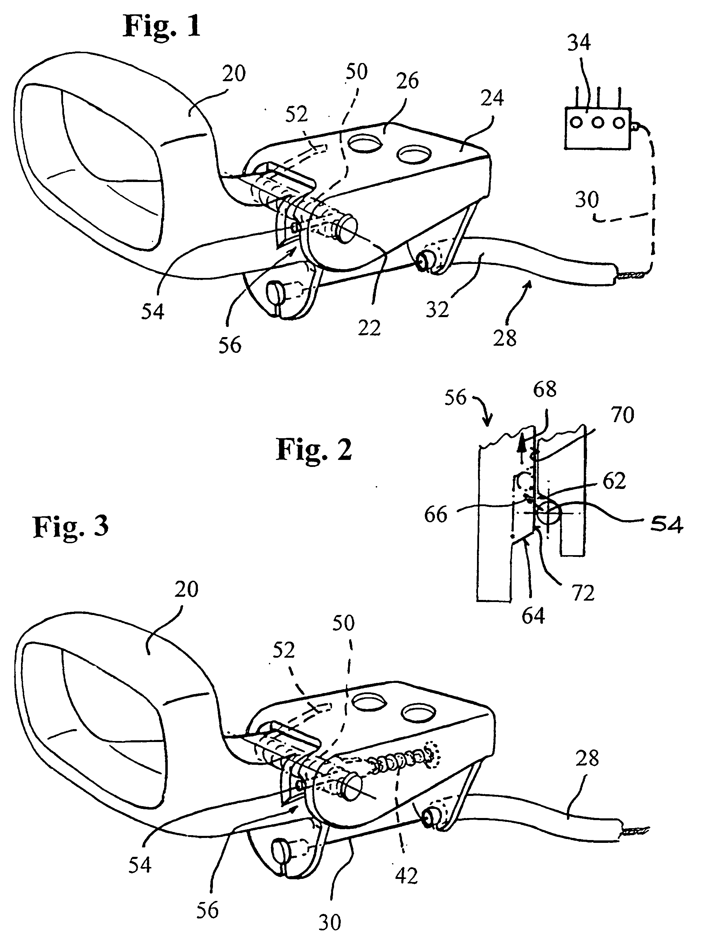

Wie schematisch in Figur 1 dargestellt ist, ist am anderen Ende des Bowdenzuges 28 eine Betätigungsvorrichtung 34 vorgesehen. Im konkreten Fall handelt es sich um eine Mehrstiftarretierung einer Längsverstellvorrichtung, wie sie aus der eingangs genannten Veröffentlichung bekannt ist.

Der Handhebel 20 hat zwei Endpositionen, die mechanisch vorgegeben sind. Sie werden durch Endanschläge erhalten. Figur 1 zeigt die Handhebelvorrichtung in Ruheposition des Handhebels. In diese wird er durch eine im Ausführungsbeispiel nach den Figuren 1 und 2 nicht dargestellte Feder, die sich beispielsweise in der Betätigungsvorrichtung 34 befinden kann, und/oder eine Unterstützungsfeder, wie sie im zweiten Ausführungsbeispiel aus Figur 3 ersichtlich ist, gehalten. Durch Schwenken des Handhebels 20 nach oben wird die zweite Endstellung, nämlich die Betätigungsstellung erreicht. Sie ist im Gegensatz zur Ruheposition keine stabile Position, vielmehr schwenkt der Handhebel 20 nach Freigabe stets in die Ruheposition, unabhängig von der Ausgangslage, in der er sich befindet.

Zwischen Handhebel 20 und Lagerteil 24 ist eine Zuschaltfeder 50, auch Drehfeder genannt, angeordnet. Sie ist mit einer Vielzahl von Wicklungen um die Schwenkachse 22 gesteckt. Sie hat einen Federschenkel 54, der in Figur 1 vom liegt. Er wird auch als erster Abstützarm bezeichnet. Sie hat weiterhin einen Abstützschenkel 52, auch zweiter Abstützarm genannt, der permanent am Lagerteil 24 anliegt, er befindet sich in Figur 1 hinten. Die Zuschaltfeder 50 befindet sich unter Spannung, anders ausgedrückt liegt der Abstützschenkel 52 mit Kraft am Lagerteil 24 an, gleiches gilt für den Federschenkel 54, auf den im folgenden noch eingegangen wird.

Im Bereich des Federschenkels 54 ist ein Umschaltbereich 56 vorgesehen, auf den im folgenden eingegangen wird. Er dient der Umschaltung des Federschenkels 52 von einer Anlage am Lagerteil 24 zu einer Anlage am Handhebel 20 und zurück. Hierzu hat der Umschaltbereich 56 für den Handhebel 20 eine Schrägfläche 62 und für das Lagerteil 24 eine Schrägfläche 64. Weiterhin gehören zum Umschaltbereich 56 eine Haltefläche 70 des Handhebels 20 und eine Haltefläche 72 des Lagerteils 24. Die Schrägfläche 62 schließt mit der zugehörigen Haltefläche 70 einen Winkel größer 90 Grad ein, gleiches gilt zwischen Schrägfläche 64 und Haltefläche 72. Die Halteflächen 70, 72 verlaufen auf einer Ebene quer zur Schwenkachse 22. Der Federschenkel 54 befindet sich normalerweise in Anlage an der Schrägfläche eines Teils, beispielsweise der Schrägfläche 62 des Handhebels 20 und der Haltefläche des anderen Teils, also im Beispiel der Haltefläche 72 des Lagerteils. Es gibt auch noch eine Zwischenstellung, in der die beiden Schrägflächen 62, 64 sich in gleicher Winkelposition befinden, sie stehen dann V-förmig zueinander, der Federschenkel 54 befindet sich dann in der tiefsten Stelle des V-förmigen Rille, die die beiden Schrägflächen 62, 64 bilden.

In Figur 2 ist in Übereinstimmung mit der Position des Handhebels 20 in Figur 1 der Umschaltbereich 56 in der Ruheposition des Handhebels dargestellt. Der Federschenkel 52 liegt an der Schrägfläche 64 des Lagerteils 24 an, er wird dort gehalten, kann also von der Schrägfläche 64 nicht herunterrutschen, weil in Richtung eines Schrägpfeils 66 der Weg des Federschenkels 54 versperrt ist, dort befindet sich nämlich die Haltefläche 70 des Handhebels 20.

Wird nun der Handhebel 20 im Sinne des Pfeils 68 verschwenkt, also in die Betätigungsstellung geschwenkt, gleitet die Haltefläche 70 des Handhebels 20 relativ zur Schrägfläche 64 des Lagerteils 24, anders ausgedrückt rutscht der Federschenkel 54 an der Haltefläche 70 entlang. Sobald in Richtung des Pfeils 68 die Schrägfläche 64 des Lagerteils nicht mehr vorn ist, sondern die Schrägfläche 62 des Handhebels 20 weiter vom liegt, rutscht der Federschenkel 54 auf die Schrägfläche 62 des Handhebels 20. In Figur 2 ist strichpunktiert eine derartige Position eingezeichnet. Strichpunktiert ist der Federschenkel 54 gezeigt, der sich nun in Anlage an der Schrägfläche 62 des Handhebels befindet, er wird in dieser Position gehalten durch Anlage an der Haltefläche 72 des Lagerteils. In dieser Stellung wirkt die Zuschaltfeder 50 auf den Handhebel 20, bewirkt also ein Drehmoment. Dieses Drehmoment war vor dem Umschalten nicht vorhanden.

Bei Rückbewegung des Handhebels 20 laufen die Vorgänge umgekehrt ab.

Das Ausführungsbeispiel nach Figur 3 funktioniert grundsätzlich ebenso wie das soeben beschriebene Ausführungsbeispiel, jedoch ist zusätzlich noch eine Unterstützungsfeder 42 vorgesehen, die zwischen Handhebel 20 und Lagerteil 24 angeordnet ist. Sie ist in Figur 2 als Schraubendruckfeder ausgeführt. Sie hat zwei Endbereiche und ist so angeordnet, dass in einer Winkelzwischenstellung zwischen Ruheposition und Betätigungsstellung eine Gerade, die die beiden Endbereiche verbindet, auch durch die Achslinie der Schwenkachse 22 läuft. In dieser Winkelzwischenstellung kann sie kein Drehmoment auf den Handhebel 20 auswirken, sie befindet sich daher in einem Totpunkt. Auf beiden Winkelbereichen jenseits der Winkelstellung des Totpunktes bewirkt sie ein Drehmoment auf den Handhebel 20, sie belastet den Handhebel elastisch sowohl in seine Ruheposition als auch in die Betätigungsstellung. Im Totpunkt hat sie ihre kürzeste Länge, also größte Federkraft.

Anstelle der Druckfeder kann auch eine Zugfeder eingesetzt werden. Im Gegensatz zur Ausführung nach Figur 3, in der die Druckfeder ihre kleinste Länge im Totpunkt hat, hat die Zugfeder ihre größte Länge im Totpunkt.

## Patentansprüche

1. Handhebelvorrichtung für eine Betätigungseinrichtung an einem Fahrzeugsitz mit einem Lagerteil (24), das mit dem Fahrzeugsitz verbunden ist, und mit einem Handhebel (20), der a) um eine Schwenkachse (22) schwenkbar am Lagerteil (24) des Fahrzeugsitzes gelagert ist, der b) mit einem Betätigungsglied, z.B. einem Bowdenzug (28), bewegungsverbunden ist und der c) um die Schwenkachse (22) zwischen einer Ruheposition und einer Betätigungsstellung schwenkbar ist, **dadurch gekennzeichnet, dass** zwischen Lagerteil (24) und Handhebel (20) eine Drehfeder (50) angeordnet ist, die vorgespannt ist und die einen Federschenkel (54) aufweist, der in Abhängigkeit von der Position des Handhebels (20) entweder an einer Anlageschrägfläche (62) des Handhebels (20) oder an einer Abstützschrägfläche (64) des Lagerteils (24) anliegt und in einer Zwischenstellung des Handhebels (20) von der einen Schrägfläche auf die andere Schrägfläche wechselt, wobei er immer auf die Schrägfläche wechselt, die in seiner Federrichtung weiter vorn ist als die andere Schrägfläche.

2. Handhebelvorrichtung nach Anspruch 1, **dadurch gekennzeichnet, dass** sich an beiden Schrägflächen (62, 64) jeweils Halteflächen (70, 72) anschließen, die in einer Ebene quer zur Schwenkachse (22) verlaufen und in einem Winkel größer 90 Grad zur zugehörigen Schrägfläche angeordnet sind, und dass der Federschenkel (54) jeweils sowohl an einer Schrägfläche (z.B. 62) als auch an der Haltefläche (z.B. 72), die zu der anderen Schrägfläche (z.B. 64) gehört, anliegt.

3. Handhebelvorrichtung nach Anspruch 1, **dadurch gekennzeichnet, dass** es eine Zwischenstellung des Handhebels (20) zwischen seinen beiden Endpositionen gibt, in der die beiden Schrägflächen V-förmig zueinander stehen und sich der Federschenkel (54) innerhalb des von den Schrägflächen gebildeten V befindet.

4. Handhebelvorrichtung nach Anspruch 1, **dadurch gekennzeichnet, dass** die Drehfeder (50) eine Schenkelfeder mit mindestens einer Federwindung ist, die den Federschenkel (54) und einen Abstützschenkel (52) aufweist, wobei der Abstützschenkel (52) entweder am Lagerteil (24) oder am Handhebel (20) permanent anliegt.

5. Handhebelvorrichtung nach Anspruch 1, **dadurch gekennzeichnet, dass** zusätzlich eine Unterstützungsfeder (42) vorgesehen ist, die zwischen Handhebel (20) und Lagerteil (24) angeordnet ist und so verläuft, dass zwischen der Ruheposition und der Betätigungsstellung des Handhebels (20) eine Wirklinie dieser Unterstützungsfeder (42) durch die Achslinie der Schwenkachse (22) verläuft.

## Claims

1. A hand lever device for an actuation system on a vehicle seat with a bearing member (24) that is connected to the vehicle seat and with a hand lever (20) that a) is mounted on a bearing member (24) of the vehicle seat so as to be pivotal about a pivot axis (22), that b) is motion-linked to an actuation member, e.g., a Bowden cable (28) and that c) is pivotal about the pivot axis (22) between a rest position and an actuating position, **characterized in that** between the bearing member (24) and the hand lever (20) there is disposed a torsion spring (50) that is biased and comprises a spring leg (54) fitting, depending on the position of the hand lever (20), either against an inclined bearing surface (62) of the hand lever (20) or against an inclined abutment surface (64) of the bearing member (24) and passing, in an intermediate position of the hand lever (20), from the one inclined surface to the other inclined surface, thereby always passing to the respective one of the inclined surfaces that is farther in front than the other inclined surface as viewed from its spring direction.

2. The hand lever device as set forth in claim 1, **characterized in that** retaining surfaces (70, 72) extend as a continuation of a respective one of the two inclined surfaces (62, 64), said retaining surfaces being oriented in one plane across the pivot axis (22) and disposed at an angle greater than 90.degree. with respect to the associated inclined surface, and that the spring leg (54) fits both against a respective one of the inclined surfaces (e.g., 62) and against the retaining surface (e.g., 72) belonging to the other inclined surface (e.g., 64).

3. The hand lever device as set forth in claim 1, **characterized in that** between the two end positions of the hand lever (20) there exists an intermediate position thereof in which the two inclined surfaces are inclined to form a V-shaped angle between them and that the spring leg (54) is located inside the V formed by the inclined surfaces.

4. The hand lever device as set forth in claim 1, **characterized in that** the torsion spring (50) is a leg spring with at least one winding, said leg spring comprising the spring leg (54) and a supporting leg (52), said supporting leg (52) permanently fitting either against the bearing member (24) or against the hand lever (20).

5. The hand lever device as set forth in claim 1, **characterized in that** there is additionally provided an assisting spring (42) that is disposed between the hand lever (20) and the bearing member (24) and is oriented in such a manner that a line of action of said assisting spring (42) passes through the axial line of the pivot axis (22) between the rest position and the actuation position of the hand lever (20).

## Revendications

1. Système de manette pour un dispositif de commande monté sur un siège de véhicule avec une pièce d'appui (24) qui est reliée au siège de véhicule et avec une manette (20) qui a) est montée pivotante autour d'un axe de pivotement (22) sur une pièce d'appui (24) du siège de véhicule, b) est solidaire du mouvement d'un organe de commande, p. ex. d'un câble de type Bowden (28), et c) est mobile en pivotement autour de l'axe de pivotement (22) entre une position de repos et une position de commande, **caractérisé en ce qu'**un ressort de torsion (50) est disposé entre la pièce d'appui (24) et la manette (20), ce ressort de torsion étant maintenu en précontrainte et comportant une branche (54) de ressort qui, suivant la position de la manette (20), est en appui soit contre une surface inclinée d'appui (62) de la manette (20) soit contre une surface inclinée de support (64) de la pièce d'appui (24) et passe, dans une position intermédiaire de la manette (20), d'une surface inclinée à l'autre surface inclinée, la surface inclinée à laquelle elle passe étant toujours la surface inclinée située plus en avant que l'autre surface inclinée, vu dans la direction de son mouvement de ressort.

2. Système de manette selon la revendication 1, **caractérisé en ce que** des surfaces de retenue (70, 72), orientées dans un plan en travers de l'axe de pivotement (22) et disposées de manière à former, avec la surface inclinée associée, un angle supérieur à 90 degrés, s'étendent dans le prolonguement de chacune des deux surfaces inclinées (62, 64) et que la branche (54) du ressort est respectivement en appui à la fois contre une surface inclinée (p.ex. 62) et contre la surface de retenue (p.ex. 72) appartenant à l'autre surface inclinée (p.ex. 64).

3. Système de manette selon la revendication 1, **caractérisé en ce qu'**il existe, entre les deux positions d'extrémité de la manette (20), une position intermédiaire dans laquelle les deux surfaces inclinées forment à elles deux un V et que la branche (54) du ressort est située à l'intérieur du V formé par les surfaces inclinées.

4. Système de manette selon la revendication 1, **caractérisé en ce que** le ressort de torsion (50) est un ressort à branches avec au moins une spire comportant la branche (54) du ressort et une branche de support (52), la branche de support (52) étant en appui permanent soit contre la pièce d'appui (24), soit contre la manette (20).

5. Système de manette selon la revendication 1, **caractérisé en ce qu'**est prévu en plus un ressort auxiliaire (42), ce ressort auxiliaire étant interposé entre la manette (20) et la pièce d'appui (24) et étant orienté de telle sorte qu'une ligne d'action de ce ressort auxiliaire (42) passe par la ligne axiale de l'axe de pivotement (22) entre la position de repos et la position de commande de la manette (20).
